# EUROPEAN PATENT SPECIFICATION

(11) **EP 2 251 098 B1**
(45) Date of publication and mention of the grant of the patent: **03.07.2013**
(21) Application number: 10161917.9
(22) Date of filing: 04.05.2010
(51) Int. Cl.: B05C 7/08, B05C 19/00, B28B 19/00, F16L 55/1645, F16L 55/18, F16L 9/17, B05C 5/02

(54) **Device to distribute and applicate a sealing substance and corresponding method**
Vorrichtung zum verteilen und anbringen eine Dichtmasse und entsprechendes Verfahren
Appareil pour la distribution et l'application d'une substance d'étanchéité et méthode correspondante

(30) Priority: 06.05.2009 IT UD20090085
(43) Date of publication of application: 17.11.2010
(73) Proprietor: MAEN s.n.c. di Campini Mauro e Campini Enrico, 06055 Marsciano (PG) (IT)
(72) Inventor: Campini, Enrico, 06055 Marsciano (PG) (IT); Campini, Mauro, 06055 Marsciano (PG) (IT)
(74) Representative: Petraz, Gilberto Luigi

(56) References cited:
- WO-A1-93/05334
- CH-A- 397 480
- DE-A1- 3 602 281
- US-A- 2 017 042
- US-A- 3 351 289
- US-A- 3 810 441
- US-A- 4 455 965
- US-B1- 7 112 350

## Description

### FIELD OF THE INVENTION

The present invention concerns an apparatus and relative method, to deliver sealing substances.

In particular, the present invention can be applied to deliver sealing substances in operations to seal corner portions of oblong elements of varying lengths and substantially closed sections, mainly square or rectangular, such as tubes, pipes, tanks or other similar elements.

### BACKGROUND OF THE INVENTION

The use of pipes with square or rectangular section is known, for example in refrigeration and air conditioning plants.

Such pipes are usually made starting from panels made of sandwich type material on which, by means of milling, a number of longitudinal and parallel notches are made, equal to the number of edges of the pipe, and which define the bending lines of the panel. The notches are generally of the "V" type with walls inclined by about 45°.

Then, a gluing substance is applied in the notches and the panel is progressively bent so as to fit the two walls of each notch together, to make them adhere and thus form the pipe with its substantially closed section.

To avoid problems of infiltration of mites, dirt or other undesirable substances through the edges of the pipe thus formed, in particular in substantially aseptic environments such as laboratories, hospital rooms or others, the edges are normally covered on their inside corner by sealing substances.

The application of sealing substances is normally carried out by means of guns or delivery heads. It is obvious that the application of the sealing substance on the inside edges of a closed pipe, which can be 4 meters or more in length, is somewhat difficult.

Therefore solutions have been designed in which a delivery head of sealing substances is attached to a handle, or extension, with which the operator, at one end of the pipe, can reach the inside edges to distribute the sealing substance.

The use of the extension, however, makes the sealing operation extremely awkward for the operator and takes a relatively long time if, for example, the operation is carried out with the operator at one end of the pipe and then at the other.

Moreover the distribution of the sealing substance can be imprecise and uneven.

DE 3602281 discloses a device to repair or coat sewer pipes. The device comprises a self-propelling vehicle which runs in the sewer and a single articulation arm movable with five degrees of freedom in order to bring the vehicle to the required point and in the required angular position. This document discloses a single device for the delivery of a repairing or coating substance associated to the movable vehicle.

US-A-3.351.289 which represents the preamble of claim 1, discloses an apparatus for applying a protective refractory coating to the refractory lining of furnaces. This document too discloses a single device for the delivery of the coating substance.

Purpose of the present invention is to make an apparatus which is simple and economic to produce and which allows to distribute a sealing substance rapidly and precisely, onto internal portions of oblong elements, such as tubes or pipes with a substantially closed section, of relatively long lengths.

The Applicant has devised, tested and embodied the present invention to overcome the shortcomings of the state of the art and to obtain these and other purposes and advantages.

### SUMMARY OF THE INVENTION

The present invention is set forth and characterized in the independent claims 1 and 6, while the dependent claims describe other characteristics of the invention or variants to the main inventive idea.

In accordance with the above purpose, an apparatus to deliver and apply a sealing substance, for sealing internal corner portions of a hollow oblong element with a varying section, mainly rectangular or square, and varying length, comprises a delivery unit able to deliver the sealing substance on said portions.

According to a characteristic feature of the present invention, the apparatus comprises first movement means associated with the delivery unit and able to move it in a substantially automatic manner inside the element, in a direction substantially parallel to its longitudinal axis, and second movement means able to move delivery elements of said delivery unit in order to dispose them selectively in correspondence with specific delivery positions inside said element in correspondence with its corner portions.

The present invention therefore allows to seal internal corner portions of oblong elements with a square or rectangular section in a substantially automatic manner, and on all the length of the element, performing a double movement: a first movement serving to bring the delivery unit, as a whole, from a first position outside the element to a second internal position, and substantially disposed at the opposite end of the element with respect to that of the entrance. When the delivery unit reaches this position, in correspondence with one end of the element, a second automatic movement is activated, which disposes the real delivery elements, such as little tubes or flexible pipes, supporting at least a delivery head with at least a nozzle, in correspondence with the relative corner zone to be sealed.

Having obtained this positioning, the delivery unit is moved, in its entirety, with a movement in an inverse direction to the first movement, the delivery of the sealing substance by the delivery elements being activated at the same time through the nozzle. This inverse movement covers the whole length of the element, until it returns the delivery unit substantially to the starting position, after having completed the delivery of the sealing substance to all the zones concerned.

Preferably, the apparatus comprises a processing and command unit connected to the movement means, to the delivery unit and its delivery elements and able to drive and control the movement means and the delivery unit.

According to a variant, the delivery elements are made at least partly of a relatively flexible material so as to compensate for any possible irregularities of the pipe and to be positioned in proximity to the corner portions to be sealed.

Thanks to their flexibility, the delivery elements are disposed substantially automatically in close proximity, if not in precise correspondence, to the corner portion to be sealed, inasmuch as the radial thrust toward the outside to which they are subjected brings them in a natural way to rest against the corned formed by two adjacent inside walls of the pipe to be sealed.

According to another variant, the delivery elements comprise a number of delivery heads coordinated to the number of portions to be sealed. This solution allows to deliver the sealing substance onto a plurality of corner portions at the same time, with a consequent considerable saving of time.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a view from above of an apparatus according to the present invention;
- fig. 2 is a lateral view of the apparatus in fig. 1;
- fig. 3a is a lateral view of a detail of the apparatus in fig. 1;
- fig. 3b is a front view of a detail of the apparatus in fig. 1;
- figs. 4a-4d are schematic views of the apparatus in fig. 1 in four different operating conditions.

### DETAILED DESCRIPTION OF A PREFERENTIAL FORM OF EMBODIMENT

With reference to the attached drawings, an apparatus 10 to deliver a sealing substance is used to seal the inside portions of an oblong hollow element, with a square or rectangular section, in this case the corner portions 50 of a pipe 11 with a rectangular section.

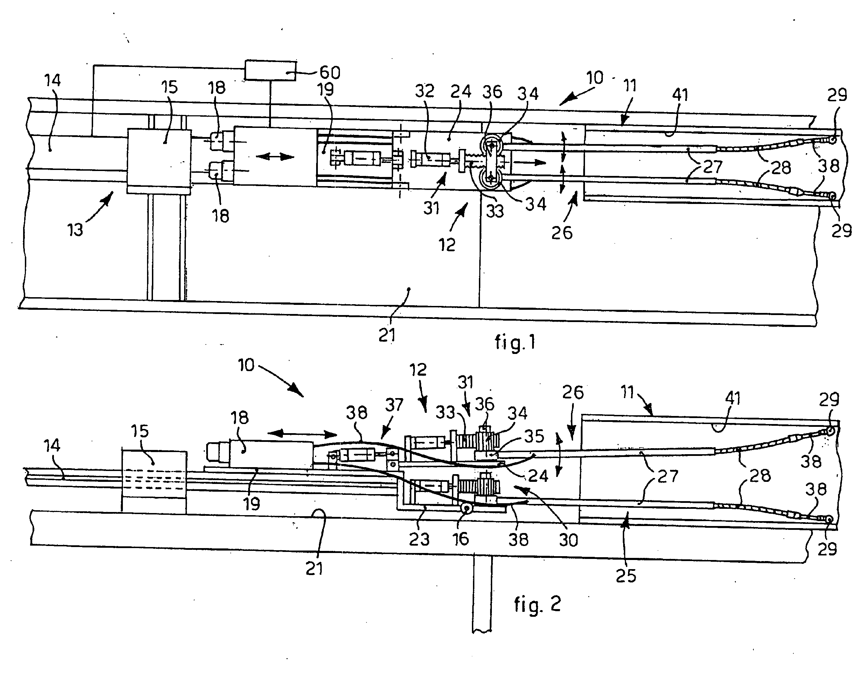

With particular reference to figs. 1 and 2, the apparatus 10 according to the present invention comprises a frame 20, a support plane 21 attached to the frame 20, a delivery unit 12, movement means 13 and a processing and command unit 60.

The movement means 13 comprise a horizontal guide 14 associated with the frame 20 upstream from the support plane 21, by means of an attachment block 15 with respect to which the guide 14 can move, in this case on a horizontal plane, forward and back, about four meters, thanks to a kinematic mechanism not visible in the drawings. Moreover, it is possible to move the attachment block 15 on the frame in a direction substantially perpendicular to the guide 14. This allows to predispose the apparatus 10 to seal pipes 11 with different sections.

The delivery unit 12 is attached to the end of the guide 14 facing toward the support plane 21, and comprises a first support plate 19 substantially parallel to the support plane 21, on which two distribution cylinders 18 of the sealing substance are disposed, fed from a tank located on board the machine and not shown in the drawings.

The delivery unit 12 also comprises a second support plate 23 and a third support plate 24, located downstream of the first support plate 19. The second support plate 23 is attached to one end of the first support plate 19, and is disposed substantially parallel to the support plane 21. On the lower surface of the second plate 23 a pair of wheels 16 are mounted which facilitate the advance of the delivery unit 12.

The third support plate 24 is disposed higher than the second support plate 23 and at a determinate distance from it, and is hinged at one end to the first support plate 19 in order to be able to be moved, by means of a mechanical actuator 37 of the known type, from a first position, or inactive position, substantially parallel to the second support plate 23, to a second operating position, in which it diverges from it by a predetermined angle correlated to the section sizes of the pipe 11.

A first pair of delivery arms 25 and a second pair of delivery arms 26 are associated, respectively by means of a first divaricator device 30 and a second divaricator device 31, with the free end portions of the second support plate 23 and the third support plate 24. Each delivery arm comprises a rigid tube 27 attached at a first end to the respective divaricator device 30 or 31, a flexible tube 28 extending from a second opposite end of the rigid tube 27, and a delivery head 29.

The delivery head 29, in this case, is a Bakelite sphere on which there is a nozzle 42 oriented coordinately to the relative corner portion 50 to be sealed

Each delivery head 29 is fluidically connected to a distribution cylinder 18 by means of a conveyor tube 38 able to convey the sealing substance from the distribution cylinder 18 to the nozzle 42 and passing partly inside the rigid tube 27 and the flexible tube 28.

The conveyor tube 38 is made of a relatively flexible material so as to allow to position the delivery head 29 suitably, according to the position of the corner portions 50.

The first 30 and the second 31 divaricator devices both comprise a pneumatic member 32, a rack 33 connected to the pneumatic member 32, and two cogged wheels 34, each of which is kinematically associated with a toothed side of the rack 33 and is attached in correspondence with the lower surface to a bushing 35. Each pair formed by the cogged wheel 34 and the bushing 35 is pivoted at the lower part to the relative support plate and at the upper part to a pivoting bar 36 disposed above the rack 33.

The processing and command unit 60 is connected to the guide 14 and to the delivery unit 12.

The apparatus 10 as described heretofore functions as follows.

The pipe 11 is positioned, manually or automatically by known means, onto the support plane 21 at a predetermined distance from the delivery unit 12, and in such a manner that an entrance 17 is aligned with the axis of the guide 14.

The guide 14, driven by means of known devices on a signal from the processing and command unit 60, slides forward moving the delivery unit 12 toward the entrance 17 by means of the wheels 16.

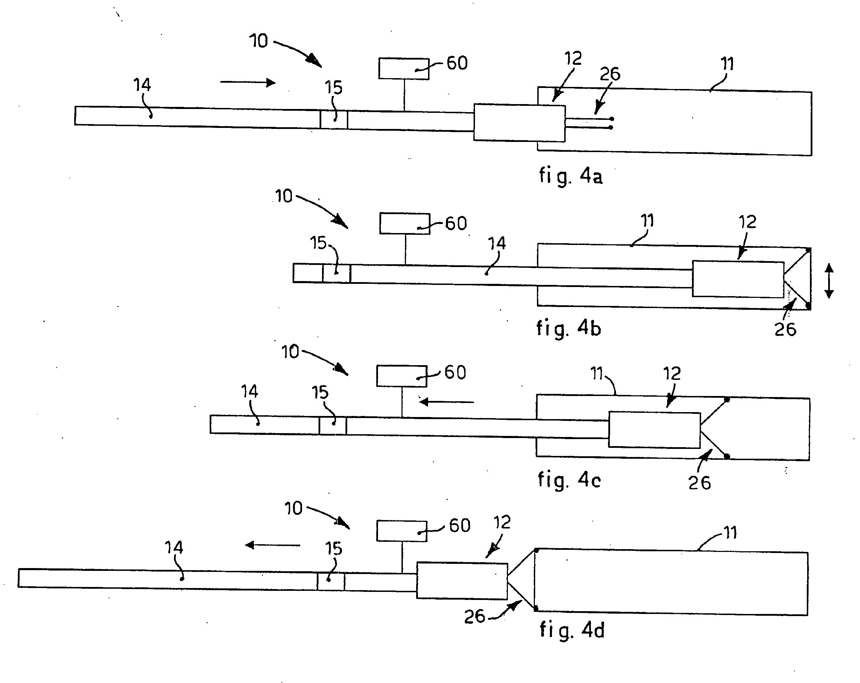

The delivery unit 12 enters the entrance 17 and continues its advance inside the pipe 11 (fig. 4a) until the delivery heads 29 reach the exit of the pipe 11. The length of the travel of the delivery unit 12 inside the pipe 11 is pre-set in the processing and command unit 60 which manages the sliding of the guide 14.

The delivery unit 12 is stopped in this position and the processing and command unit drives the mechanical actuator 37 which makes the third support plate 24 rotate with respect to its hinging axis, so that the free end of the two rigid tubes 27 of the first pair of delivery arms 25 contacts the upper wall 41 of the pipe 11. Then, the pneumatic members 32 are driven, which move the racks 33, which put the cogged wheels 34 coordinately in rotation.

The bushings 35 rotate solidly with the cogged wheels 34 and cause the delivery arms to spread apart (fig. 4b).

In this way each delivery head 29 positions itself automatically, by abutting against it, in correspondence with the relative corner portion 50 to be sealed: in particular, the delivery heads 29 of the first pair of delivery arms 25 reach the lower corner portions 50, whilst the delivery heads 29 of the second pair of delivery arms 26 reach the upper corner portions 50.

Then the processing and command unit 60 makes the guide 14 move back so that the delivery unit 12 makes a return travel inside the pipe 11 (fig. 4c).

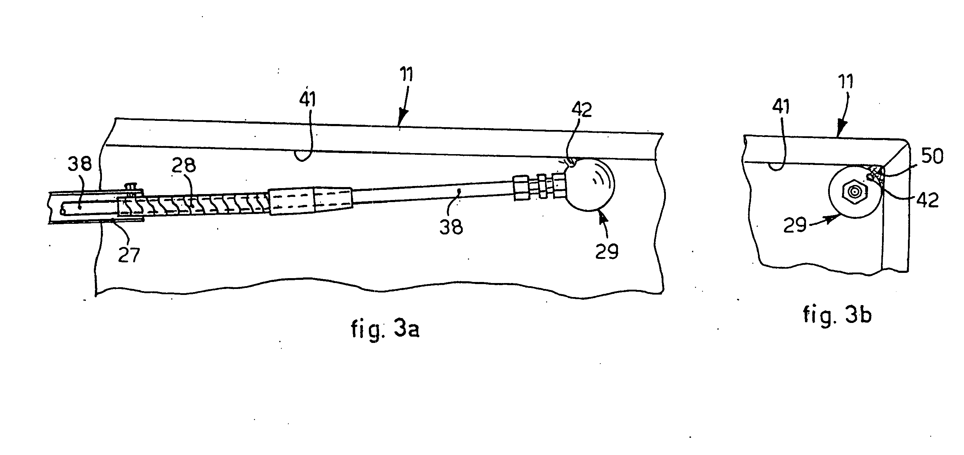

During the return travel, the sealing substance is delivered by the nozzles 42 and a pressure is applied by the delivery head 29 on the substance so as to make it adhere to the corner portions 50 (figs. 3a and 3b).

For this purpose, the nozzles 42 are angled and oriented toward the inside with respect to the delivery head 29, so that in the return travel the delivery head 29, which is of a substantially spherical conformation, or has at least one partly spherical or rounded part, can exert a suitable pressure on the sealing substance just delivered by the nozzle 42, to make it adhere.

The application of the sealing substance by the delivery heads 29 is carried out throughout the return travel of the delivery unit 12 inside the pipe 11, that is, until the delivery heads 29 reach the edge of the entrance 17 (fig. 4d).

The number of delivery arms can vary in relation to the number and to the conformation of the portions to be sealed.

Moreover, according to a variant, the apparatus 10 can be provided with alignment means associated with the support plane 21, and able to align the entrance 17 of the pipe 11 to the delivery unit 12.

According to another variant, the apparatus 10 comprises detection means, for example of the optical type, coordinated to the processing and command unit 60. The detection means detect the position of the portions to be sealed and send this detection to the aforesaid processing and command unit 60 which drives the mechanical actuator 37, the first divaricator device 30 and the second divaricator device 31 so that the delivery arms reach the aforesaid portions.

Another variant provides rotation means to rotate the delivery unit 12.

## Claims

1. Apparatus suitable to deliver and apply a sealing substance for sealing internal corner portions (50) of a hollow oblong element (11) of varying section, substantially closed, in particular square or rectangular, and of varying length, comprising a delivery unit (12) able to deliver said sealing substance on said portions (50), said apparatus comprising first movement means (13) associated with said delivery unit (12) and able to move it in a substantially automatic manner inside said oblong element (11), in a direction substantially parallel to the longitudinal axis of said element (11), **characterized in that** it comprises second movement means (24, 30, 31, 37) able to move, in a radial direction with respect to the direction of advance of the delivery unit (12), a first pair of delivery arms (25) and a second pair of delivery arms (26) each comprising an elongated tubular element (28) of the flexible type supporting a delivery head (29), in order to dispose them selectively and automatically in correspondence with said corner portions (50) of said oblong element (11), wherein said delivery head (29) comprises at least a nozzle (42), angled and oriented toward the inside with respect to the delivery head (29) so as to deliver the sealing substance in an internal position with respect to the position of the delivery head (29), and wherein said delivery head (29) has a spherical conformation to exert an adhesion pressure on the sealing substance delivered by the nozzle (42) during at least a segment of the return travel of said delivery unit (12) inside said oblong element (11).

2. Apparatus as in claim 1, **characterized in that** said first pair of delivery arms (25) and said second pair of delivery arms (26) are associated to respective divaricator devices (30, 31) able to be actuated, in use, to position the respective delivery head (29) in abutment with the relative corner portion (50) of the tube.

3. Apparatus as in claim 2, **characterized in that** said divaricator devices (30, 31) are mounted on the ends of respective second and third support plates (23, 24) in their turn mounted on a first support plate (19), wherein the second support plate (23) supports the first pair of delivery arms (25) and the third support plate (24) supports the second pair of delivery arms (26), and wherein the third plate (24) is hinged to the first plate (19) in order to be angled with respect to the second support plate (23) according to the size of said oblong element (11).

4. Apparatus as in claim 1, **characterized in that** it comprises a processing and command unit (60) connected to the movement means (13) and to the delivery unit (12), able to drive and control the movement means (13) and the delivery unit (12).

5. Apparatus as in claim 2, **characterized in that** each delivery arm (25, 26) comprises a rigid tube (27) attached at a first end to the respective divaricator device (30, 31) and said tubular flexible element (28).

6. Method to deliver and apply a sealing substance for sealing internal portions (50) of a hollow oblong element (11) of varying section, substantially closed, and varying length, in which a delivery unit (12) is used, able to deliver said sealing substance on said portions (50), in which a first step is provided in which the delivery unit (12) is taken from a first position outside the element (11) to a second internal position, and disposed substantially at the opposite end of the element (11) with respect to the entry end, c**haracterized in that** it comprises a second step in which a first and second pair of delivery arms (25, 26), which comprise a tubular element (28) at one end, of the flexible type supporting a spherical delivery head (29), are divaricated each other to be moved in proximity with the relative corner portion (50) to be sealed, a third step in which the delivery unit (12) is moved with a movement inverse to the first movement, at the same time the delivery being activated of the sealing substance through at least a nozzle (42) made in the delivery head (29) and oriented toward the inside of said delivery head (29) until it is returned to the starting position with a return travel, after having completed the delivery of the sealing substance in all the zones concerned, in which, for at least a segment of the return travel, said spherical delivery head (29) acts as a pressure element in order to make the sealing substance adhere in correspondence with said corner portion.

## Patentansprüche

1. Vorrichtung, geeignet zum Abgeben und Auftragen einer Dichtungssubstanz zum Abdichten von inneren Eckabschnitten (50) eines hohlen länglichen Elements (11) mit variierendem Querschnitt, das im Wesentlichen geschlossen, insbesondere quadratisch oder rechteckig ist und eine variierende Länge aufweist, umfassend eine Abgabeeinheit (12), welche in der Lage ist, die Dichtungssubstanz an den Abschnitten (50) abzugeben, wobei die Vorrichtung erste Bewegungsmittel (13) umfasst, die mit der Abgabeeinheit (12) verbunden und in der Lage sind, diese in einer im Wesentlichen automatischen Weise innerhalb des länglichen Elements (11) in einer Richtung im Wesentlichen parallel zur Längsachse des Elements (11) zu bewegen, **dadurch gekennzeichnet, dass** sie zweite Bewegungsmittel (24, 30, 31, 37), die in der Lage sind, sich in einer radialen Richtung in Bezug auf die Vorschubrichtung der Abgabeeinheit (12) zu bewegen, ein erstes Paar von Abgabearmen (25) und ein zweites Paar von Abgabearmen (26) umfasst, die jeweils ein längliches rohrförmiges Element (28) vom flexiblen Typ umfassen, das einen Abgabekopf (29) trägt, um sie selektiv und automatisch in Entsprechung mit den Eckabschnitten (50) des länglichen Elements (11) anzuordnen, wobei der Abgabekopf (29) mindestens eine Düse (42) umfasst, die abgewinkelt und in Richtung der Innenseite in Bezug auf den Abgabekopf (29) ausgerichtet ist, um die Dichtungssubstanz in einer inneren Position in Bezug auf die Position des Abgabekopfs (29) abzugeben, und wobei der Abgabekopf (29) eine kugelförmige Gestalt aufweist, um auf die Dichtungssubstanz, die durch die Düse (42) abgegeben wird, während mindestens einer Teilstrecke des Rückschubs der Abgabeeinheit (12) innerhalb des länglichen Elements (11) einen Haftdruck auszuüben.

2. Vorrichtung nach Anspruch 1, **dadurch gekennzeichnet, dass** das erste Paar von Abgabearmen (25) und das zweite Paar von Abgabearmen (26) mit jeweiligen Spreizeinrichtungen (30, 31) verbunden sind, die in Verwendung betätigt werden können, um den jeweiligen Abgabekopf (29) am relativen Eckabschnitt (50) des Rohrs anliegend zu positionieren.

3. Vorrichtung nach Anspruch 2, **dadurch gekennzeichnet, dass** die Spreizeinrichtungen (30, 31) an den Enden von jeweiligen zweiten und dritten Trägerplatten (23, 24) montiert sind, die ihrerseits auf einer ersten Trägerplatte (19) montiert sind, wobei die zweite Trägerplatte (23) das erste Paar von Abgabearmen (25) trägt, und die dritte Trägerplatte (24) das zweite Paar von Abgabearmen (26) trägt, und wobei die dritte Platte (24) drehbar an der ersten Platte (19) angebracht ist, um in Bezug auf die zweite Trägerplatte (23) gemäß der Größe des länglichen Elements (11) abgewinkelt zu werden.

4. Vorrichtung nach Anspruch 1, **dadurch gekennzeichnet, dass** sie eine Verarbeitungs- und Steuereinheit (60) umfasst, die mit den Bewegungsmitteln (13) und der Abgabeeinheit (12) verbunden und in der Lage ist, die Bewegungsmittel (13) und die Abgabeeinheit (12) anzutreiben und zu steuern.

5. Vorrichtung nach Anspruch 2, **dadurch gekennzeichnet, dass** jeder Abgabearm (25, 26) eine starres Rohr (27), das an einem ersten Ende der jeweiligen Spreizeinrichtung (30, 31) befestigt ist, und das rohrförmige flexible Element (28) umfasst.

6. Verfahren zum Abgeben und Auftragen einer Dichtungssubstanz zum Abdichten von inneren Abschnitten (50) eines hohlen länglichen Elements (11) mit variierendem Querschnitt, das im Wesentlichen geschlossen ist und eine variierende Länge aufweist, wobei eine Abgabeeinheit (12) verwendet wird, die in der Lage ist, die Dichtungssubstanz an den Abschnitten (50) abzugeben, wobei ein erster Schritt vorgesehen ist, in welchem die Abgabeeinheit (12) von einer ersten Position außerhalb des Elements (11) in eine zweite, innere Position gebracht und im Wesentlichen am gegenüberliegenden Ende des Elements (11) in Bezug auf das Eintrittsende angeordnet wird, **dadurch gekennzeichnet, dass** es einen zweiten Schritt umfasst, in welchem ein erstes und zweites Paar von Abgabearmen (25, 26), die ein rohrförmiges Element (28) vom flexiblen Typ an einem Ende umfassen, das einen kugelförmigen Abgabekopf (29) trägt, auseinander gespreizt werden, um in unmittelbare Nähe zum relativen Eckabschnitt (50) bewegt zu werden, der abgedichtet werden soll, einen dritten Schritt, in welchem die Abgabeeinheit (12) mit einer Bewegung entgegengesetzt zur ersten Bewegung bewegt wird, wobei gleichzeitig die Abgabe der Dichtungssubstanz durch mindestens eine Düse (42) aktiviert wird, die im Abgabekopf (29) ausgebildet und in Richtung der Innenseite des Abgabekopfs (29) ausgerichtet ist, bis sie mit einem Rückschub in die Ausgangsposition zurückbewegt wird, nachdem die Abgabe der Dichtungssubstanz in allen betreffenden Zonen abgeschlossen ist, wobei für mindestens eine Teilstrecke des Rückschubs der kugelförmige Abgabekopf (29) als ein Druckelement fungiert, um zu bewirken, dass die Dichtungssubstanz in Entsprechung mit dem Eckabschnitt haftet.

## Revendications

1. Appareil apte à délivrer et appliquer une substance d'étanchéisation pour étanchéiser des parties angulaires internes (50) d'un élément oblong creux (11) de section variable, substantiellement fermé, en particulier carré ou rectangulaire, et de longueur variable, comprenant une unité de délivrance (12) capable de délivrer ladite substance d'étanchéisation sur lesdites parties (50), ledit appareil comprenant des premiers moyens de mouvement (13) associés à ladite unité de délivrance (12) et capables de la déplacer de manière substantiellement automatique à l'intérieur dudit élément oblong (11), dans une direction substantiellement parallèle à l'axe longitudinal dudit élément (11), **caractérisé en ce qu'**il comprend des deuxièmes moyens de mouvement (24,30,31,37) capables de se mouvoir, dans une direction radiale par rapport à la direction d'avancement de l'unité de délivrance (12), une première paire de bras de délivrance (25) et une seconde paire de bras de délivrance (26) comprenant chacun un élément tubulaire allongé (28) du type flexible support une tête de délivrance (29), afin de les disposer sélectivement et automatiquement en correspondance avec chaque partie angulaire (50) dudit élément oblong (11), ladite tête de délivrance (29) comprenant au moins une buse (42), faisant un angle et étant orientée vers l'intérieur par rapport à la tête de délivrance (29) de façon à délivrer la substance d'étanchéisation dans un emplacement interne par rapport à l'emplacement de la tête de délivrance (29), et ladite tête de délivrance (29) ayant une conformation sphérique pour exercer une pression d'adhérence sur la substance d'étanchéisation délivrée par la buse (42) durant au moins un segment de la trajectoire de retour de ladite unité de délivrance (12) à l'intérieur dudit élément oblong (11).

2. Appareil selon la revendication 1, **caractérisé en ce que** ladite première paire de bras de délivrance (25) et ladite seconde paire de bras de délivrance (26) sont associées à des dispositifs d'écartement (30,31) respectifs capables d'être actionnés, lors de l'utilisation, pour positionner la tête de délivrance respective (29) en butée avec la partie angulaire relative (50) du tube.

3. Appareil selon la revendication 2, **caractérisé en ce que** lesdits dispositifs d'écartement (30,31) sont montés sur des extrémités de deuxièmes et troisièmes plaques de support respectives (23,24) montées à leur tour sur une première plaque de support (19), la deuxième plaque de support (23) supportant la première paire de bras de délivrance (25), la troisième plaque de support (24) supportant la deuxième paire de bras de délivrance (26) et la troisième plaque (24) étant articulée à la première plaque (19) afin de former un angle par rapport à la deuxième plaque de support (23) suivant la taille dudit élément oblong (11).

4. Appareil selon la revendication 1, **caractérisé en ce qu'**il comprend une unité de traitement et de commande (60) connectée aux moyens de mouvement (13) et à l'unité de délivrance (12), capable de piloter et de contrôler les moyens de mouvement (13) et l'unité de délivrance (12).

5. Appareil selon la revendication 2, **caractérisé en ce que** chaque bras de délivrance (25,26) comprend un tube rigide (27) fixé à une première extrémité au dispositif d'écartement respectif (30,31) et audit élément flexible tubulaire (28).

6. Procédé pour délivrer et appliquer une substance d'étanchéisation pour étanchéiser des parties internes (50) d'un élément oblong creux (11) de section variée, substantiellement fermé, et de longueur variable, dans lequel une unité de délivrance (12) est utilisée, capable de délivrer ladite substance d'étanchéisation sur lesdites parties (50), dans lequel une première étape est prévue au cours de laquelle l'unité de délivrance (12) est amenée d'un premier emplacement à l'extérieur de l'élément (11) vers un second emplacement interne, et disposée substantiellement à l'extrémité opposée de l'élément (11) par rapport à l'extrémité d'entrée, **caractérisé en ce qu'**il comprend une deuxième étape dans laquelle une première et une seconde paires de bras de délivrance (25,26), lesquels comprennent un élément tubulaire (28) à une extrémité, du type flexible supportant une tête de délivrance sphérique (29), sont écartés l'un de l'autre pour être déplacés à proximité de la partie angulaire relative (50) devant être étanchéisée, une troisième étape dans laquelle l'unité de délivrance (12) est déplacée suivant un mouvement inverse du premier mouvement, au même moment la délivrance de la substance d'étanchéisation étant activée à travers au moins une buse (42) réalisée dans la tête de délivrance (29) et orientée vers l'intérieur de ladite tête de délivrance (29) jusqu'à ce qu'elle retourne au point de départ suivant une trajectoire de retour, après avoir effectué la délivrance de la substance d'étanchéisation dans toutes les zones concernées, ladite tête de délivrance sphérique (29) agissant, sur au moins un segment de la trajectoire de retour, en tant qu'élément de pression afin de faire adhérer la substance d'étanchéisation en correspondance avec ladite partie angulaire.
